# EUROPÄISCHE PATENTSCHRIFT

(11) **EP 1 062 047 B1**
(45) Veröffentlichungstag und Bekanntmachung des Hinweises auf die Patenterteilung: **02.05.2002**
(21) Anmeldenummer: 99907628.4
(22) Anmeldetag: 12.03.1999
(51) Int. Cl.: B04C 3/06, B04C 9/00

(54) **ZYKLONABSCHEIDER**
CYCLONE SEPARATOR
SEPARATEUR CYCLONE

(30) Priorität: 13.03.1998 DE 19811090
(43) Veröffentlichungstag der Anmeldung: 27.12.2000
(73) Patentinhaber: Klass, Georg, Dipl.-Ing., D-82299 Türkenfeld (DE)
(72) Erfinder: Klass, Georg, Dipl.-Ing., D-82299 Türkenfeld (DE)
(74) Vertreter: von Bülow, Tam, Dr.
(86) Internationale Anmeldenummer: EP9901638
(87) Internationale Veröffentlichungsnummer: WO9947269

(56) Entgegenhaltungen:
- EP-A- 0 564 992
- EP-A- 0 618 012
- DE-A- 3 826 454
- DE-A- 3 911 444
- FR-A- 1 310 736
- US-A- 2 726 766
- US-A- 2 787 374
- US-A- 2 873 815
- US-A- 3 568 837
- US-A- 3 969 096
- US-A- 4 863 605

## Beschreibung

Die Erfindung betrifft einen Zyklonabscheider mit einem im wesentlichen um eine Längsachse rotationssymmetrischen Gehäuse, einem in der Nähe einer Stirnfläche des Gehäuses angeordneten Einlaß für eine im wesentlichen tangentiale Zuführung eines dispergierte Stoffe enthaltenden Fluids und wenigstens einem Auslaß für die dispergierten Stoffe und wenigstens einem Auslaß für das gereinigte Fluid.

Bei den bekannten Zyklonabscheidern der eingangs genannten Art ist bauartbedingt der Trennungsgrad von kleinsten Feststoffteilchen (dispergierte Stoffe), deren Dichte sich nur unwesentlich von der Fluiddichte unterscheidet, im allgemeinen gering, so daß das Fluid nur mangelhaft von diesen dispergierten Stoffen gereinigt wird.

Es ist deshalb die Aufgabe der vorliegenden Erfindung, einen Zyklonabscheider mit einem verbesserten Trennungsgradzu schaffen.

Erfindungsgemäß wird diese Aufgabe durch eine erste Lösung gemäß Anspruch 1 und eine zweite Lösung gemäß Anspruch 9 gelöst.

Durch den erfindungsgemäßen Zyklonabscheider wird der Trennungsgrad erheblich gesteigert, so daß auch dispergierte Stoffe, die nur einen geringfügigen Dichteunterschied im Vergleich zum Fluid aufweisen, getrennt werden können. Dadurch kann vorteilhaft ohne zusätzliche Filtermaßnahmen das gereinigte Fluid z.B. direkt Steuer- und Regeleinrichtungen oder Hochdruckpumpen zugeführt werden, wie sie z.B. in Schlammabsaugwagen zum Reinigen von Abwasserkanälen zur Erzeugung von Flüssigkeitsstrahlen mit hohem Druck verwendet werden.

Der erfindungsgemäße Zyklonabscheider weist einen erheblich verbesserten Wirkungsgrad (Trennungsgrad) auf.

So wird gemäß der ersten Lösung bei vorgegebener Einströmgeschwindigkeit des zu reinigenden Fluids (Fluid mit dispergierten Stoffen) der Drehimpuls des zu reinigenden Fluids durch die Anordnung des Einlasses an einem das Gehäuse umgebenden Ringkanal aufgrund des größeren Abstandes zur Längsachse des Gehäuses und gemäß der zweiten Lösung durch die Rotation des sich im Zyklonabscheider drehenden Rotors erhöht. Dadurch lassen sich die im Zyklonabscheider auftretenden Trägheitskräfte (z.B. die Zentrifugalkräfte) erhöhen, wodurch die Trennwirkung für Substanzen unterschiedlicher Dichte verbessert wird.

Durch die Ausbildung wenigstens eines Teils der Gehäusewand in der Höhe des Ringkanals in Form eines den Ringkanal mit dem Inneren des Gehäuses verbindenden Strömungsgleichrichters wird gemäß der ersten Lösung das zu reinigende Fluid mit wesentlich weniger Turbulenz in das Innere des Zyklongehäuses geleitet, wodurch sich bereits im Einlaßbereich eine gleichmaßige Wandströmung ohne störende Sekundärströmungen und mit wesentlich verringerter Turbulenz ausbildet. Durch diese nahezu vollständige Gleichrichtung der Strömung führt das zu reinigende Fluid bereits ab dem Einlaßbereich eine gut definierte Rotationsbewegung um die Längsachse des Gehäuses aus, wodurch bereits in diesem Bereich die Zentrifugalkräfte wirksam zur Trennung der dispergierten Stoffe beitragen.

Aufgrund der schalenförmig gegen die Längsachse des Gehäuses hin geneigten Bodenwand wird das zu filternde Fluid kontinuierlich in Richtung auf die Längsachse des Gehäuses geleitet. Dabei erhöht sich mit kleiner werdendem Radius die Rotationsgeschwindigkeit des rotierenden, zu reinigenden Fluids, wodurch die Trennwirkung für Stoffe mit unterschiedlicher Dichte zunimmt.

Durch das sich konzentrisch zur Längsachse erstreckende Rohr wird die primäre Rotationsströmung um die Längsachse des erfindungsgemäßen Zyklonabscheiders konzentrisch zum Gehäuse geführt. Dies verbessert ebenfalls die Abscheidewirkung, da die Strömung insbesondere in Bereichen mit sehr hohen Strömungsgeschwindigkeiten, wie sie in der Nähe der Bodenwand auftreten, sehr definiert ausgebildet wird.

Da das Rohr zugleich als Auslaß für das gereinigte Fluid dient und über die Bodenwandung in Richtung des Einlasses hin vorsteht, ist es notwendig, daß die vom Einlaß kommende, um die Längsachse rotierende Fluidströmung an der Bodenwand in Richtung des Einlasses umgekehrt wird, so daß wenigstens ein Teil des zu reinigenden Fluids entlang des Rohres in Richtung auf den Einlaß geleitet wird. Damit das zu reinigende Fluid durch das Rohr abfließen kann, muß dieses zusätzlich um etwa 180° umgelenkt werden. Dabei treten bei jeder Richtungsänderung des zu reinigenden Fluids Trägheitskräfte auf, welche die Trennwirkung von Substanzen unterschiedlicher Dichte vorteilhaft zusätzlich begünstigen. Diese Kräfte sind um so größer, je größer die Strömungsgeschwindigkeiten und je kleiner die Radien für die Richtungsänderung der Fluidströmung sind. Durch die oben beschriebenen Zentrifugaleffekte, und insbesondere auch durch die zweimalige Richtungsänderung des zu reinigenden Fluids erhält man am konzentrisch zur Längsachse angeordneten Rohr das im wesentlichen frei von dispergierten Stoffen gereinigte Fluid, weshalb es als Auslaß für dieses dient.

Die dispergierten Stoffe werden durch die Abflußöffnungen in der Bodenwand abgeführt, wobei durch die Fluidströmung vorteilhaft ein Festsetzen der dispergierten Stoffe verhindert wird und diese somit vollständig abgeführt werden können.

In einer zweckmäßigen Ausgestaltung der ersten Lösung erstreckt sich der Strömungsgleichrichter entlang des Umfangs der Gehäusewand. Dadurch wird vorteilhaft die Strömung im wesentlichen rotationssymmetrisch in das Gehäuse eingeleitet, wodurch sich eine gut definierte, nahezu turbulenzfreie rotationsförmige Primärströmung im rotationssymmetrischen Gehäuse ausbildet. Der Strömungsgleichrichter kann dabei abhängig von dem zu reinigenden Fluid, der einströmenden Fluidgeschwindigkeit und des Turbulenzgrades des einströmenden Fluids eine maschengitterförmige (siebförmige) oder wabenförmige Struktur aufweisen. Der Strömungsgleichrichter kann auch parallel zur Längsachse, z.B. entlang des Umfangs des Gehäuses angeordnete Stäbe umfassen, die eine Gitterstruktur bilden, oder er kann durch parallel zur Längsachse verlaufende Spalte in der Gehäusewand gebildet werden. Dabei können die einzelnen Kanäle des Strömungsg eichrichters linear oder zum Gehäuseinneren hin gekrümmt sein, um das durch den Strömungsgleichrichter strömende Fluid entsprechend zu führen. Das Einleiten der Strömung in das Gehäuseinnere läßt sich auch durch den Winkel der Kanäle des Strömungsgleichrichters relativ zur Richtung des einströmenden Fluids beeinflussen. So können z.B. die einen Strömungsgleichrichter bildenden Spalte in der Gehäusewand statt z.B. in radialer Richtung auch unter einem Winkel zur jeweiligen Radialebene ausgebildet werden, so daß das ins Gehäuseinnere strömende Fluid vorteilhaft eine tangentiale Geschwindigkeitskomponente aufweist, wodurch sich im Gehäuseinneren eine verstärkte Rotationsströmung um dies Längsachse ausbildet.

Femer können auch mehrere Strömungsgleichrichter entlang des Umfangs der Gehäusewand angeordnet sein, wobei sich jeder Strömungsgleichrichter jeweils über einen Teil der Gehäusewand in Höhe des Ringkanals erstreckt. Die so angebrachten Strömungsgleichrichter können dabei gleichartig oder aber auch verschieden ausgebildet sein.

Bevorzugt wird die Gehäusewand in der Höhe des Einlaßbereichs zylinderförmig ausgebildet, wodurch vorteilhaft die Ausbildung einer definierten rotationsförmigen Primärströmung bereits im Einlaßbereich erfolgt.

In einer weiteren bevorzugten Ausführungsform ist die Gehäusewand entlang der Längsachse zwischen dem Einlaßbereich und der schalenförmigen Bodenfläche zylinderförmig ausgebildet. Sie kann aber auch eine in Richtung auf die Bodenfläche zulaufende Kegelform haben, oder die Schalenform der Bodenwand kann sich bis zur Höhe des Einlaßbereichs fortsetzen.

In einer weiteren zweckmäßigen Ausgestaltung ist die Bodenwand konkav mit dem Auslaß für das gereinigte Fluid verbunden, wodurch man vorteilhaft eine gut definierte Strömungsumlenkung des zu reinigenden Fluids in Richtung auf den Einlaß hin erhält. Dies begünstigt ebenfalls den Trennungsgrad zwischen Fluid und den dispergierten Stoffen.

In einer weiteren bevorzugten Ausführungsform ist am Gehäuse des erfindungsgemäßen Zyklonabscheiders in der Nähe des Einlasses ein Be- und Entlüftungsventil vorgesehen. Dadurch ist es vorteilhaft möglich, das gereinigle Fluid auch Hochdruckpumpen oder Regeleinrichtungen zuzuführen, bei denen eine Zufuhr von Luft vermieden werden muß.

Der erfindungsgemäße Zyklonabscheider-kann vorteilhaft einen weiteren Auslaß umfassen, wobei dieser durch ein konzentrisch zur Längsachse und abschnittsweise innerhalb des Rohres für den Auslaß des gereinigten Fluids verlaufendes zweites Rohr umfaßt, das so angebracht ist, daß zwischen beiden Rohren ein Ringraum für einen Auslaß des gereinigten Fluids ausgebildet ist, und daß das zweite Rohr in Richtung des Einlasses über das als Auslaß für das gereinigte Fluid dienende Rohr vorsteht und einen zusätzlichen Auslaß bildet. Dadurch ist vorteilhaft abhängig von den Durchflußmengen durch die beiden Rohre, die z.B. über geeignete Ventile (z.B. Magnetventile) steuerbar sein können, auch ein fraktioniertes Abscheiden des gereinigten Fluids oder der dispergierten Stoffe möglich. So können z.B. durch das zweite Rohr Schwimmstoffe abgeführt werden.

Der erfindungsgemäße Zyklonabscheider kann in einer weiteren Ausführungsform vor dem Auslaß für das gereinigte Fluid eine nach dem Rückhalteprinzip arbeitende Filtervorrichtung umfassen. Dadurch wird vorteilhaft die Filterwirkung für das gereinigte Fluid erhöht, wodurch das gereinigte Fluid z.B. auch empfindlichen Steuervorrichtungen oder Hochdruckpumpen zugeführt werden kann. Dabei kann die Filtervorrichtung z.B. ein konzentrisch entlang der Längsachse angeordnetes hohlzylinderförmiges Filter umfassen, das mit seinem einen Ende mit dem Auslaß für das gereinigte Fluid verbunden ist.

Vorzugsweise wird in Verbindung mit der Filtervorrichtung wenigstens eine Strömungsleitfläche in dem strömenden Fluid in einem Abstand zu einem Oberflächenbereich des Filters derart angeordnet, daß auf den zwischen Strömungsleitfläche und Oberflächenbereich des Filters durchströmenden Teil des Fluids eine die Strömungsgeschwindigkeit erhöhende Düsenwirkung ausgeübt wird. Aufgrund der die Strömungsgeschwindigkeit erhöhenden Düsenwirkung nimmt vorteilhaft der statische Druck auf die Filteroberfläche an dem der Strömungsleitfläche etwa gegenüberliegenden Oberflächenbereich des Filters ab, wodurch sich der Filterkuchen im Filter ablösen läßt. Zusätzlich kann es bei entsprechender Form und Anordnung der Strömungsleitfläche an diesem Oberflächenbereich und bei geeigneten Gradienten zwischen Filteraußen- und Filterinnenfläche aufgrund des verringerten statischen Drucks zur Umkehrung der Strömungsrichtung durch das Filter kommen, d.h. es strömt dort ein Teil des Filtrats zurück in das zu reinigende Fluid, wodurch der Filterrückstand zusätzlich von der dem zu reinigenden Fluid zugekehrten Oberfläche des Filters abgelöst wird. Dieser Filterrückstand kann dann erneut z.B. den oben beschriebenen Trägheitskräften ausgesetzt werden und wird dann durch den Auslaß für die dispergierten Stoffe abgeschieden. Durch diesen Selbstreinigungsprozeß der Filteroberflächenbereiche im Bereich der Düsenwirkung können Filter mit erheblich kleineren Filteröffnungen verwendet und somit ein deutlich verbesserter Trennungsgrad des Zyklonabscheiders erreicht werden. Ferner ist das Filter wesentlich länger betriebsfähig.

Die Erfindung wird nun anhand mehrerer Ausführungsbeispiele, auf die sich die beiliegenden Zeichnungen beziehen, erläutert und beschrieben. Es zeigen:
- Fig. 1: eine schematische Seitenansicht eines Ausführungsbeispiels des erfindungsgemäßen Zyklonabscheiders mit zylinderförmiger Gehäusewand;
- Fig. 2: eine schematische Draufsicht des in Fig. 1 dargestellten Zyklonabscheiders mit einem sich entlang des Umfangs der Gehäusewand erstreckenden Strömungsgleichrichter,
- Fig. 3: eine schematische Draufsicht des in Fig. 1 dargestellten Zyklonabscheiders mit mehreren jeweils sich über einen Teil der Gehäussewand erstreckenden Strömungsgleichrichter;
- Fig. 4: eine schematische Seitenansicht eines weiteren Ausführungsbeispiels des erfindungsgemäßen Zykonabscheiders mit abschnittsweise kegelförmiger Gehäusewand;
- Fig. 5: eine schematische Seitenansicht eines weiteren Ausführungsbeispiels des erfindungsgemäßen Zyklonabscheiders mit schalenförmiger Gehäusewand;
- Fig. 6: ein weiteres Ausführungsbeispiel des erfindungsgemäßen Zyklonabscheiders mit einem zweiten konzentrisch zur Längsachse angeordneten Auslaß;
- Fig. 7: eine schematische Seitenansicht eines weiteren Ausführungsbeispiels des erfindungsgemäßen Zyklonabscheiders mit einer Filtereinrichtung;
- Fig. 8: eine schematische Seitenansicht eines weiteren Ausführungsbeispiels des erfindungsgemäßen Zyklonabscheiders mit einer Filtereinrichtung und in einem Abstand zum Oberflächenbereich des Filters angeordneten Strömungsleitflächen und einem Antrieb für diese Strömungsleitflächen;
- Fig. 9: eine schematische Schnittansicht entlang der Linie X-X in Fig. 8;
- Fig. 10: eine schematische Seitenansicht eines Ausführungsbeispiels des erfindungsgemäßen Zyklonabscheiders mit zylinderförmiger Gehäusewand;
- Fig. 11: eine schematische Schnittansicht entlang der Linie XII-XII in Fig. 10;
- Fig. 12: eine schematische Seitenansicht eines weiteren Ausführungsbeispiels des erfindungsgemäßen Zyklonabscheiders mit einer Filtereinrichtung und in einem Abstand zum Oberflächenbereicht des Filters angeordneten Rotorflügeln in der Form von Strömungsleitflächen;
- Fig. 13: eine schematische Schnittansicht entlang der Linie XIV-XIV in Fig. 12;
- Fig. 14: eine schematische Seitenansicht eines weiteren Ausführungsbeispiels des erfindungsgemäßen Zyklonabscheiders mit einer Filtereinrichtung und Rotorflügeln in der Form von radial angebrachten Platten; und
- Fig. 15: eine schematische Schnittansicht entlang der Linie XVI-XVI in Fig. 14.

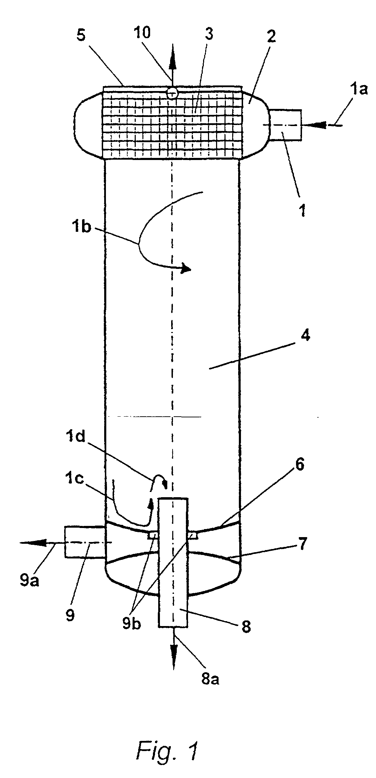

Fig. 1 zeigt schematisch ein Ausführungsbeispiel eines erfindungsgemäßen Zyklonabscheiders mit einem zylinderförmigen Gehäuse 4, einem Einlaß 1 für ein dispergierte Stoffe enthaltendes Fluid 1a, der im wesentlichen tangential in der Nähe einer Stimfläche 5 des Gehäuses 4 in einen das Gehäuse 4 umgebenden Ringkanal 2 mündet. Dabei ist in der Höhe des Ringkanals 2 an der Gehäusewand ein Strömungsgleichrichter 3 vorgesehen, der den Innenraum des Gehäuses 4 mit dem Ringkanal 2 verbindet, und durch den das zu reinigende Fluid 1a in das Gehäuseinnere geführt wird. Zum Be- und Entlüften des erfindungsgemäßen Zyklonabscheiders ist im gezeigten Ausführungsbeispiel ein Be- und Entlüftungsventil 10 in der Nähe der Stimfläche 5 vorgesehen. Auf der dem Einlaß etwa gegenüberliegenden Stimseite 7 des Gehäuses 4 ist auf dessen Innenseite eine gegen die Längsachse des Gehäuses 4 hin geneigte schalenförmige Bodenwand 6 ausgebildet, die von einem konzentrisch zur Längsachse des Gehäuses 4 angeordneten Rohr 8 durchsetzt wird. Dabei steht das Rohr 8 von der Bodenwand 6 über eine vorbestimmte Länge in Richtung der Stirnfläche 5, die sich in der Nähe des Einlasses 1 befindet, vor. Das Rohr 8 dient als Auslaß für das gereinigte Fluid 8a, das im gezeigten Ausführungsbeispiel in Richtung der Längsachse vom Einlaß 1 weg abgeführt wird. In der Bodenwand 6 sind in der Nähe des Rohres 8 Abflußöffnungen 9b vorgesehen, die als Auslaß für die dispergierten Stoffe 9a dienen, welche im gezeigten Ausführungsbeispiel durch einen durch die Bodenwand 6 und die Stirnfläche 7 gebildeten Kanal über einen Auslaß 9 abgeführt werden. Als Abflußöffnung dient eine ringkanalförmige Öffnung 9b um den Auslaß 8.

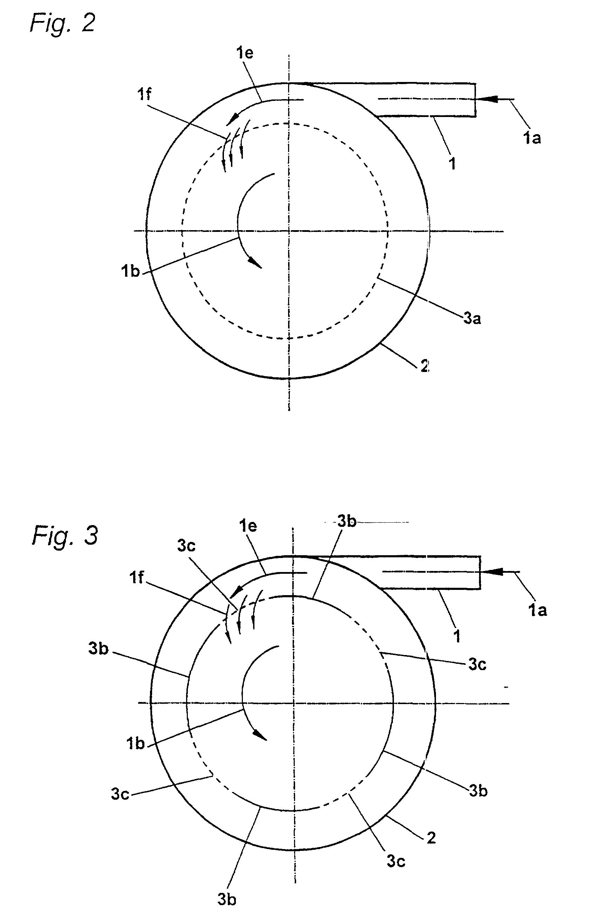

Fig. 2 zeigt schematisch eine Draufsicht des in Fig. 1 dargestellten Ausführungsbeispiels mit dem tangential zum Ringkanal 2 angeordneten Einlaß 1 für das zu reinigende Fluid 1a. Die transversale Bewegung des zu reinigenden Fluids 1a wird dabei bereits im Ringkanal in eine Rotationsbewegung 1e umgesetzt. Das zu reinigende Fluid 1 a strömt durch den Strömungsgleichrichter 3a in das Innere des Gehäuses 4 (angedeutet durch die Pfeile 1f). Der Strömungsgleichrichter 3a ist in dem in Fig. 2 dargestellten Ausführungsbeispiel entlang des Umfangs des Gehäuses in der Höhe des Ringkanals 2 angebracht und kann aus einem Maschengitter (Sieb), einem wabenförmigen Netz, parallel zur Längsachse des Zyklonabscheiders verlaufenden Stäben, die entlang des Umfangs angeordnet sind und eine Gitterstruktur ausbilden, oder parallel zur Längsachse verlaufenden Schlitzen in der Gehäusewand ausgebildet sein. Die Kanäle des Strömungsgleichrichters, die das zu reinigende Fluid 1a in das Innere des Gehäuses 4 leiten (angedeutet durch die Pfeile 1f), können radial oder unter einem Winkel zu einer dem jeweiligen Kanal zugeordneten, durch die Längsachse verlaufenden Ebene ausgerichtet sein. Sind die Kanäle unter einem solchen in Strömungsrichtung weisenden Winkel angeordnet (der von den Eigenschaften des strömenden Fluids abhängig ist), so wird vorteilhaft das zu reinigende Fluid bereits mit einer starken Rotationsbewegung ins Innere des Gehäuses geleitet.

Durch die rotationssymmetrische Ausbildung des Gehäuses 4 und durch das tangentiale Einleiten des zu reinigenden Fluids 1a bildet sich im Inneren des Gehäuses 4 ebenfalls eine Rotationsströmung 1b um dessen Längsachse aus, die auch als Primär- oder primäre Rotationsströmung bezeichnet wird. Aufgrund eines Druckgradienten zwischen dem Einlaß 1 und den Auslässen 8, 9 wird das zu reinigende Fluid in Richtung der Auslässe 8, 9 transportiert, so daß insgesamt eine schraubenförmige Rotationsbewegung 1 b entlang der Längsachse des Gehäuses 4 für das zu reinigende Fluid ausgebildet wird.

Fig. 3 zeigt eine weitere Ausgestaltungsmöglichkeit eines Strömungsgleichrichters 3c, wie er z.B. in dem in Fig. 1 dargestellten Ausführungsbeispiel einsetzbar ist Dabei ist entlang eines Teils des Umfangs der Gehäusewand ein Strömungsgleichrichter 3c (z.B. der oben beschriebenen Art) angebracht, es können aber auch mehrere Strömungsgleichrichter entlang des Umfangs angebracht sein, wie dies z.B. in Fig. 3 dargestellt ist. Dabei sind die Strömungsgleichrichter durch Wandabschnitte 3b der Gehäusewand voneinander getrennt. Femer können die Strömungsgleichrichter 3c gleich oder verschieden sein, so können z.B. Strömungsgleichrichter in Form von wabenförmigen Netzen und in Maschenform einander abwechsein. Bevorzugt werden jedoch gleichartige Strömungsgleichrichter 3c entlang des Umfangs der Gehäusewand angebracht, um eine gut definierte rotationssymmetrische Primärströmung 1b auszubilden.

Im folgenden wird die Arbeitsweise des erfindungsgemäßen Zyklonabscheiders anhand des in Fig. 1 dargestellten Ausführungsbeispiels beschrieben. Das zu reinigende Fluid 1a strömt über den Einlaß 1 in den Ringkanal 2 und tritt durch den oder die Strömungsgleichrichter 3 in das Innere des Gehäuses 4. Das Fluid 1a strömt dann etwa spiralförmig um die Längsachse des Gehäuses 4 in Richtung auf die Bodenwand 6 (angedeutet durch den Pfeil 1b), und wird in der Nahe der Bodenwand 6 etwa in radiale Richtung zum Auslaß 8 hin geienkt, in dessen Nähe es eine weitere Umlenkung etwa in Richtung des Einlasses 1 bzw. der Stimfläche 5 erfährt (angedeutet durch Pfeil 1c). Damit das Fluid durch den Auslaß 8 für das gereinigte Fluid 8a abfließen kann, muß es erneut seine axiale Bewegungsrichtung etwa um 180° ändern (angedeutet durch Pfeil 1d). Durch den Auslaß 8 fließt ein im wesentlichen frei von dispergierten Stoffen gereinigtes Fluid 8a ab.

Allgemein sammeln sich die spezifisch schwereren Stoffe in der Nähe des Wandbereichs des Gehäuses 4 und werden durch die Strömung 1c rotationsförmig in Richtung der Längsachse des Gehäuses zur Bodenwand 6 transportiert. Aufgrund der axialen Richtungsumkehr der Strömung in der Nähe des Auslasses 8 für das gereinigte Fluid nahe der Rotationsachse scheiden sich die spezifisch schwereren Stoffe (dispergierte Stoffe) im wesentlichen dort ab und werden durch die Abflußöffnungen 9b, die sich in diesem Bereich in der schalenförmigen Bodenwand 6 befinden, durch den Auslaß 9 für die dispergierten Stoffe abgeführt. Der Grad der Trennung hängt dabei wesentlich von der Strömungsgeschwindigkeit (und den damit auftretenden Beschleunigungen) des Fluids 1a ab. Ferner wird der Trennungsgrad zusätzlich von den Flüssen durch die jeweiligen Auslässe 8, 9 für das gereinigte Fluid 8a und die dispergierten Stoffe 9a beeinflußt. Diese Flußverhältnisse können vorteilhaft durch steuerbare Ventile, die sich z.B. in den Abflußleitungen befinden, dem gewünschten Trennungsgrad angepaßt werden. Ein typisches Flußverhältnis zwischen dem Auslaß 8 für das gereinigte Fluid 8a und dem Auslaß 9 für das dispergierte Stoffe enthaltende Fluid 9a beträgt z.B. 10:1.

Der erfindungsgemäße Zyklonabscheider (z.B. in der in Fig. 1 dargestellten Ausführungsform) kann ferner einen oder mehrere zusätzliche Strömungsgleichrichter (in Fig. 1 nicht dargestellt) umfassen, die im Einlaß 1 angeordnet sind, um die lineare Strömung des Fluids 1a bereits im Einlaß gleichzurichten.

Ferner kann der erfindungsgemäße Zyklonabscheider (z.B. aus Fig. 1) auch zusätzlich im inneren des Gehäuses 4 Strömungsleitflächen (nicht dargestellt) umfassen, um z.B. die axiale Richtungsumlenkung 1d der Fluidströmung entlang definierter Bahnen zu lenken, wodurch der Trennungsgrad zusätzlich beeinflußt werden kann. Die Strömungsleitflächen können z.B. in Form von Strömungskörpem oder in Form von plan, konvex oder konkav geformten Platten ausgebildet sein, die in Richtung auf den Einlaß 1 in einem bestimmten Abstand vor dem Auslaß 8 für das gereinigte Fluid 8a konzentrisch zur Längsachse des Zyklongehäuses 4 angebracht werden.

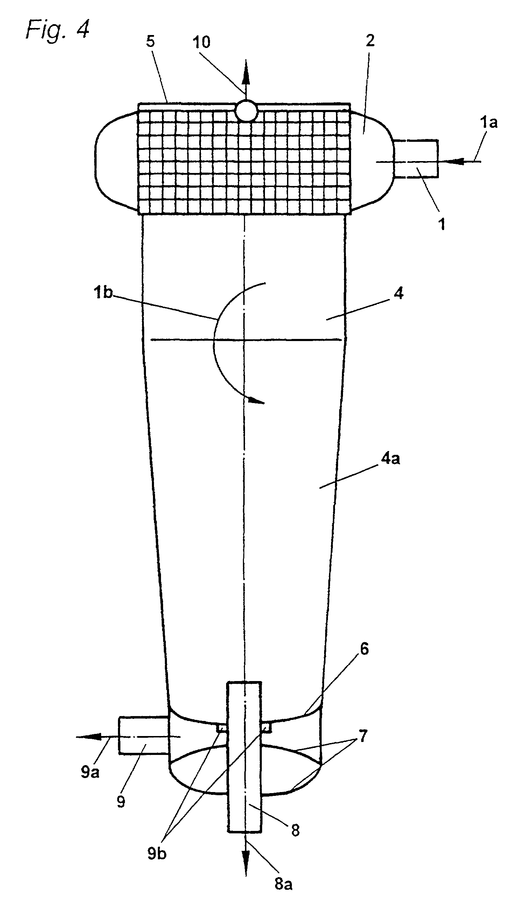

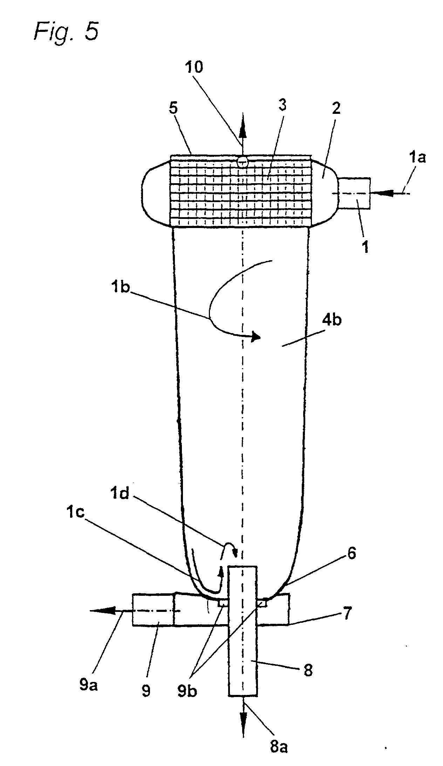

In den Figuren 4 und 5 sind zwei weitere Ausführungsbeispiele des erfindungsgemäßen-Zyklonabscheiders schematisch dargestellt, wobei gleiche oder gleichwirkende Teile mit den gleichen Bezugszeichen wie in Fig. 1 bezeichnet sind.

Die beiden Ausführungsbeispiele unterscheiden sich von dem in Fig. 1 dargestellten Zyklonabscheider durch die Form des rotationssymmetrischen Gehäuses 4, 4a, 4b. Der in Fig. 4 dargestellte Zyklonabscheider umfaßt ein im Bereich des Ringkanals 2 zylinderförmiges Gehäuse 4, an das sich ein kegelförmiges Gehäuse 4a anschließt, dessen Durchmesser sich stetig verringert und das schließlich in die schalenförmige Bodenwand 6 übergeht. Dadurch, daß ein Teil des Gehäuses 4, 4a kegelförmig ausgebildet ist, nimmt die Rotationsgeschwindigkeit im kegelförmigen Teil 4a des Gehäuses 4, 4a mit enger werdendem Gehäusedurchmesser zu, wodurch der Zentrifugeneffekt bereits entlang des Gehäuses 4, 4a stetig zunimmt und damit die Trennung von Substanzen unterschiedlicher Dichte begünstigt. Im Bereich der Bodenwand 6, der Auslaßöffnungen 9b und des Auslasses 8 für das gereinigte Fluid 8a treten ähnliche Strömungen und Trennwirkungen auf, wie sie bereits im Zusammenhang mit Fig. 1 beschrieben wurden.

Statt einer zylinder- und/oder kegelförmigen Ausbildung der Gehäusewand kann diese auch bis hin zum Ringkanal 2 schalenförmig ausgebildet sein, wie dies in Fig. 5 dargestellt ist. Dabei ist das Gehäuse 4b im Bereich des Ringkanals 2 bevorzugt zylinderförmig ausgebildet, jedoch kann sich die schalenförmige Form bis in den Bereich des Ringkanals fortsetzen. Auch hier nimmt die Rotationsgeschwindigkeit des zu reinigenden Fluids 1a mit abnehmendem Gehäusedurchmesser zu, wodurch sich die Trennwirkung in Richtung des Auslasses 8 für das gereinigte Fluid 8a aufgrund des zunehmenden Zentrifugaleffekts verstärkt. Die axiale Strömungsumlenkungen 1c und 1d in der Nähe der Bodenwand 6, des Auslasses 8 sowie der Abflußöffnungen 9b erfolgt ähnlich wie in Fig. 1 beschrieben, wodurch eine ähnlich gute Trennung der dispergierten Stoffe erzielt wird. Die dispergierten Stoffe 9a und das gereinigte Fluid 8a werden wie in Fig. 1 beschrieben abgeführt.

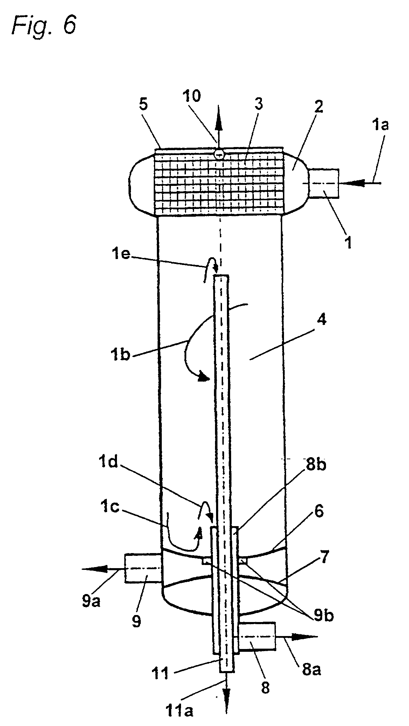

Fig. 6 zeigt ein weiteres Ausführungsbeispiel des erfindungsgemäßen Zyklonabscheiders, der ähnlich dem in Fig. 1 dargestellten Zyklonabscheider aufgebaut ist, weshalb gleiche und gleichwirkende Teile auch gleich bezeichnet sind. Bei dieser Ausführung ist ein zusätzlicher Auslaß 11 vorgesehen, der in Form eines konzentrisch zur Längsachse angebrachten Rohres, das abschnittsweise innerhalb des Rohres 8, das den Auslaß für das gereinigte Fluid 8a bildet, angebracht ist. Dabei sind die beiden Rohre 11 und 8 so gegeneinander gehaltert, daß sich zwischen beiden Rohren ein Ringraum ausbildet, durch den das gereinigte Fluid 8a durch das Rohr 8 abführbar ist. Das abschnittsweise innerhalb des Rohres 8 geführte zweite Rohr 11 steht in Richtung des Einlasses über das Rohr 8 in das Gehäuseinnere mit einer vorbestimmten Länge vor. Durch das zweite Rohr 11 wird vorteilhaft die primäre ringförmige Strömung 1b längs der Rotationsachse zusätzlich geführt, wodurch die Strömung insbesondere im Bereich um die Rohre 8, 11 der beiden Auslasse sehr rotationssymmetrisch ausgebildet ist, was den Trennungsgrad zusätzlich verbessert. Die axialen Strömungsverhältnisse 1c, 1d im Bereich der schalenförmigen Bodenwand 6 und des Auslasses 8 für das gereinigte Fluid 8a und ihre Wirkung auf den Trennungsgrad von Substanzen unterschiedlicher Dichte sind auch bei diesem Ausführungsbeispiel ähnlich wie in Fig. 1 dargestellt.

Durch entsprechende Wahl der Abflußmenge durch den Auslaß 9 für die dispergierten Stoffe 9a, den Auslaß 8 für das gereinigte Fluid 8a und das zweite Rohr 11 läßt sich ebenfalls der Grad der Trennung für das gereinigte Fluid 8a beeinflussen. Ferner besteht die Möglichkeit, durch geeignete Wahl der Strömungsgeschwindigkeiten und der Flüsse durch die Auslässe 9, 8 und 11 eine fraktionierte Trennung der dispergierten Stoffe durchführen. Insbesondere ist der zweite Auslaß (das zweite Rohr) 11 dazu geeignet, um gegenüber dem Fluid spezifisch leichtere Stoffe (z.B. Schwimmstoffe) aus dem zu reinigenden Fluid 1a abzuscheiden (angedeutet durch Pfeil 1e).

Zum fraktionierten Trennen können insbesondere mehr als zwei Rohre konzentrisch ineinander so angebracht werden, daß sie wenigstens abschnittsweise innerhalb des Auslasses 8 für das gereinigte Fluid 8a verlaufen, wobei die Rohre mit kleinerem Durchmesser jeweils weiter in das Gehäuseinnere über den Auslaß 8 für das gereinigte Fluid 8a hinaus vorstehen, und wobei zwischen jeweils benachbarten Rohren ein Ringkanal zur Abführung des Fluids ausgebildet ist.

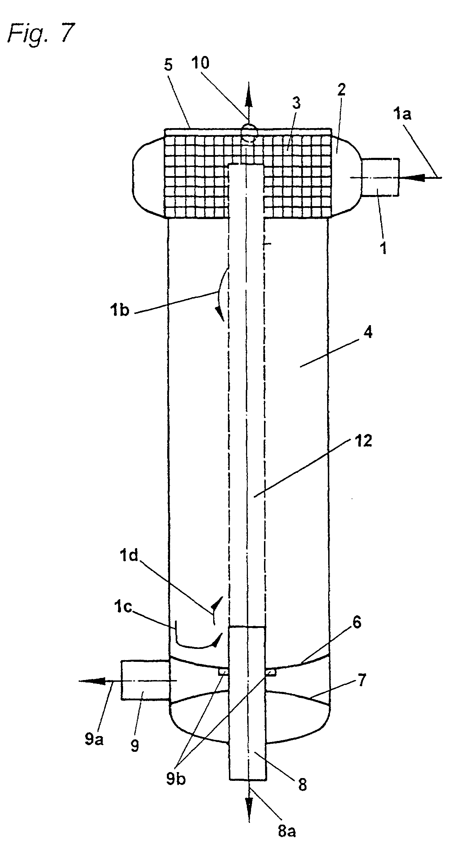

Fig. 7 zeigt das in Fig. 1 dargestellte Ausführungsbeispiel eines erfindungsgemäßen Zyklonabscheiders. Dabei ist in Verlängerung des Auslasses 8 für das gereinigte Fluid 8a in Richtung auf den Ringkanal ein hohlzylinderförmiges Filter 12 angebracht, das als Rückhaltefilter für die dispergierten Stoffe dient, wodurch die Qualität (Reinheit) des gereinigten Fluids 8a zusätzlich verbessert wird.

Allgemein kann am Ausiaß 8 eine Filtervorrichtung angebracht werden, die zusätzlich über eine Reinigungsvorrichtung zum Reinigen des Filters von den zurückgehaltenen dispergierten Stoffen verfügt.

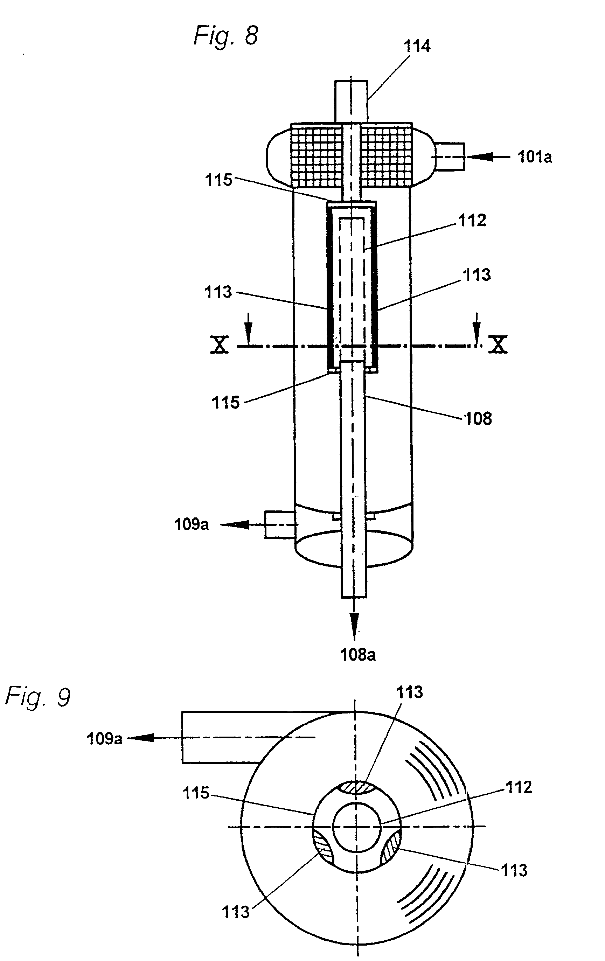

Fig. 8 zeigt ein gegenüber der Fig. 7 abgewandeltes Ausführungsbeispiel des erfindungsgemäßen Zyklonabscheiders, wobei gleiche Teile in Fig. 8 mit einem gegenüber den Bezugszeichen von Fig. 7 um 100 erhöhten Bezugszeichen gekennzeichnet sind. Zusätzlich zu der in Fig. 7 dargestellten Ausführungsform sind in Fig. 8 Strömungsleitflächen 113 in einem Abstand zu einem Oberflächenbereich des Filters 112 angeordnet Die Strömungsleitflächen 113 sind dergestalt ausgeführt, daß auf den zwischen einer Strömungsleitfläche 113 und dem Oberflächenbereich des Filters 112 durchströmenden Teil des Fluids eine die Strömungsgeschwindigkeit erhöhende Düsenwirkung ausgeübt wird. Als eine Strömungsleitfläche kann in einer einfachen Ausführungsform eine ebene Platte dienen, die in einer Ebene parallel zu einer Tangentialebene in einem Abstand zur Oberfläche des hohlzylinderförmigen Filters angeordnet ist. Weitere Ausführungsformen umfassen Strömungsleitflächen, deren Querschnitte rautenförmig, plankonvex, bikonvex oder tragflächenartig sind. Allgemein kann sich der Querschnitt einer Strömungsleitfläche entlang der Achse des Zyklonabscheiders sowohl in Form als auch in Größe (Querschnittsfläche) ändem.

Die Strömungsleitflächen 113 in Fig. 8 und 9 sind in Form des Profils von drei Stangen gebildet. Die Stangen erstrecken sich parallel zu der Achse des Filters 112 und im Abstand von der Filteroberfläche. Sie sind an einer Halterung 115 (z.B. einem Drehkreuz) befestigt und können in einer bevorzugten Ausführungsform um die Achse des Filters 112 rotieren, wobei die Rotationsgeschwindigkeit und die Drehrichtung z.B. durch einen Antrieb 114 steuerbar sind.

Andererseits könnte die Ausführung auch so getroffen werden, daß die Strömungsleitflächen 113 feststehend ausgebildet werden und das Filter 112 durch einen nicht gezeigten Antrieb in Rotation versetzbar ist, wobei eine Rotation in und entgegen der Strömungsrichtung möglich ist.

In einer weiteren speziellen Ausführungsform können sowohl die Strömungsleitflächen 113 als auch das Filter 112 um die Zylinderachse rotieren, wobei die Rotation der Strömungsleitflächen 113 und des Filters 112 sowohl gleich- als auch gegensinnig zueinander und in Richtung bzw. entgegen der Richtung des einströmenden zu filternden Fluids 101a sein kann.

Fig. 9 zeigt einen schematischen Schnitt durch die in Fig. 8 dargestellte Ausführungsform. Die die drei Strömungsleitflächen 113 bildenden Stangen haben jeweils einen bikonvexen Querschnitt und sind in einem Winkelabstand von z.B. 120° um das hohlzylinderförmige Filter 112 angeordnet und gegebenenfalls mit dem Antrieb 114 gemeinsam um das Filter 112 drehbar.

Im folgenden wird die Wirkungsweise des in Fig. 8 und Fig. 9 dargestellten Ausführungsbeispiels des erfindungsgemäßen Zyklonabscheiders beschrieben. Durch die Strömungsleitflächen 113 wird die Oberfläche des Filtereinsatzes 112 durch die Düsenwirkung im Bereich der erhöhten Strömungsgeschwindigkeit aufgrund des verringerten statischen Druckes. (und der eventuell auftretenden Kavitation) gereinigt, da in diesem Bereich sich lokal die Radialkomponente der Strömungsrichtung deutlich verringert oder sogar umkehrt.

Durch den verringerten statischen Druck auf die Filteroberfläche und die erhöhte Strömungsgeschwindigkeit des zu filternden Fluids 101a läßt sich der Filterrückstand ablösen. Abhängig vom radialen Druckgradienten im Filter 112 kann bei ausreichendem statischen Druck im Filterinneren in diesem Bereich auch eine Umkehrung der Strömungsrichtung erfolgen, wodurch das Fluid statt von außen in Richtung auf die Zylinderachse dort von dieser in Richtung der Strömungsleitfläche fließt, wodurch der Filterrückstand zusätzlich abgelöst wird. Sofem die Strömungsverhältnisse so gewählt werden, daß Kavitation entsteht, kann ein Ablösen des Filterrückstands zusätzlich begünstigt werden.

Wird der Filtereinsatz 112 durch eine (nicht dargestellte) Antriebsvorrichtung in Rotation versetzt, so kann bei feststehenden Strömungsleitflächen 113 nahezu die gesamte Oberfläche (Mantelfläche) des Filtereinsatzes 112 gereinigt werden. Durch die Wahl der Drehrichtung und der Rotationsgeschwindigkeit läßt sich die Stärke der Düsenwirkung (d.h. der statische Druck auf die Filteroberfläche im Bereich der Strömungsleitflächen) steuern. Wird das Filter entgegen der Strömungsrichtung des strömenden, zu filternden Fluids 101 a gedreht, so addieren sich die Geschwindigkeiten des Fluids und des Filtereinsatzes und es lassen sich starke Düsenwirkungen bis hin zur Kavitation an der Filteroberfläche erzeugen. Bei einer derartigen Anordnung ergibt sich der Vorteil, daß die Kavitation zuerst am Filter auftritt, nicht dagegen an der Strömungsleitfläche, wodurch die Kavitation zur Filterreinigung verwendet werden kann.

Soll aus Materialgründen Kavitation vermieden werden und ist die Strömungsgeschwindigkeit des Fluids 101a bereits sehr hoch, so wird der Filtereinsatz 112 vorzugsweise in Drehrichtung des Fluids 101a gedreht.

Alternativ zur Drehung des Filtereinsatzes 112 können wie oben beschrieben auch die Strömungsleitflächen 113 durch eine Antriebsvorrichtung 114 um die Zylinderachse gedreht werden. Dadurch kann bei Drehung in Strömungsrichtung des Fluids 101 a dessen Rotationsströmung unterstützt und das Auftreten einer Kavitation an den Strömungsleitflächen 113 verhindert werden. Bei Drehung der Strömungsleitflächen 113 entgegen der Strömungsrichtung des Fluids 101a, können Kavitationseffekte und Wirbelfelder erzeugt werden.

In einer weiteren Ausführungsform können sich sowohl das Filter 112 als auch die Strömungsleitflächen 113 um die Zylinderachse drehen, wobei je nach Drehrichtung Kavitation gänzlich vermieden werden oder bevorzugt entweder an den Strömungsleitflächen 113 oder der Filteroberfläche 112 erzeugt werden kann. Femer kann sich allgemein das Profil der Strömungsleitflächen 113 in Richtung der Rotationsachse ändern, um die Strömungsleitflächen 113 einem in dieser Richtung vorhandenen Druckgradienten anzupassen.

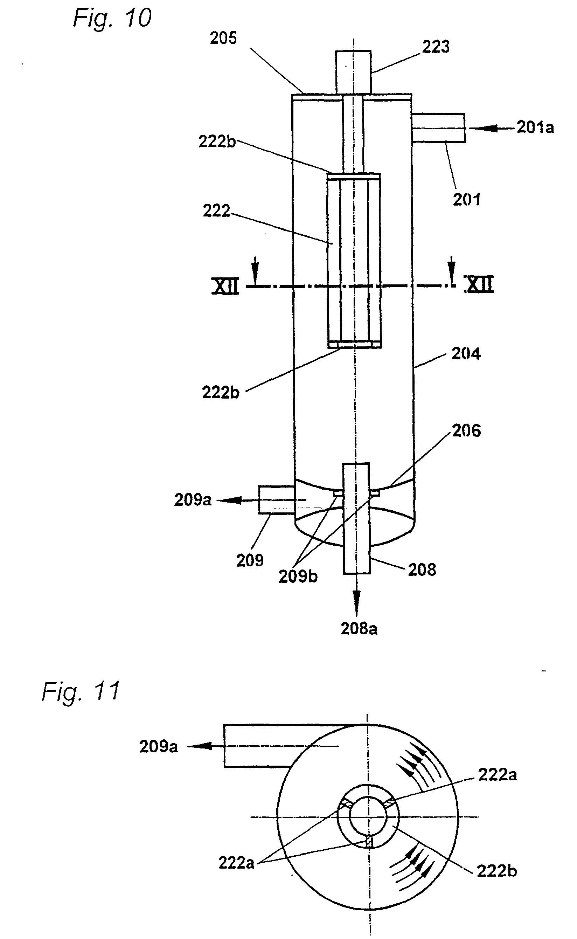

Fig. 10 und 11 zeigen schematisch ein Ausführungsbeispiel eines erfindungsgemäßen Zyklonabscheiders, wobei gleiche Teile wie in Fig. 1 mit einem gegenüber der Fig. 1 um 200 erhöhten Bezugszeichen gekennzeichnet sind. Der Einlaß 201 für das dispergierte Stoffe enthaltende Fluid 201a mündet im wesentlichen tangential in das Innere des Gehäuses 204. Auf der Achse des Gehäuses 204 ist ein um diese Achse drehbarer Rotor 222 gelagert, der durch einen Motor 223 antreibbar ist. Die Rotorblätter 222a des Rotors werden durch radial verlaufende Platten gebildet, die in einem Winkelabstand von z.B. 120° um die Rotationsachse angeordnet sind und an ihren Enden an zwei ringförmigen Halterungen 222b derart gehalten werden, daß sie sich in ihrer Längsrichtung im wesentlichen parallel zur Längsachse des Zyklons erstrecken. Mit Hilfe dieses Rotors kann die Rotationsbewegung des ins Innere des Gehäuses 204 geleiteten Fluids vorteilhaft verstärkt werden.

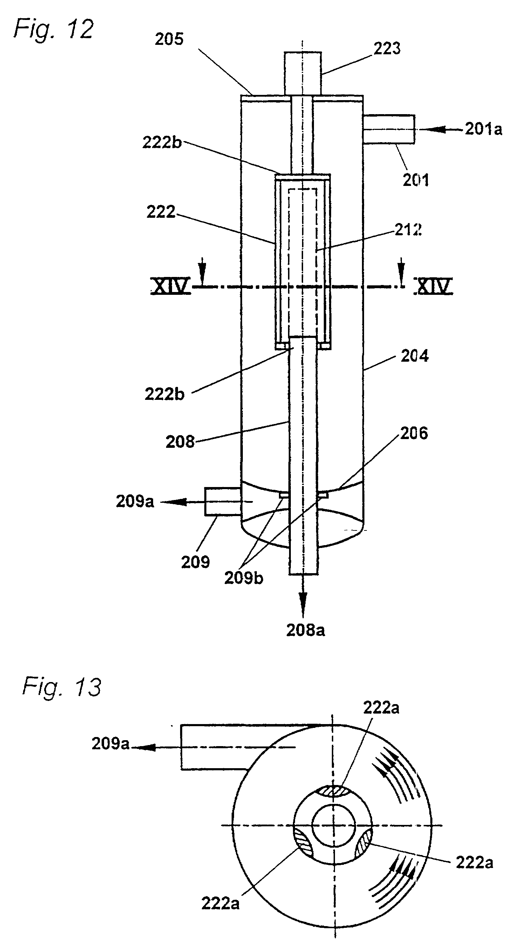

In den Figuren 12 und 13 ist eine ähnliche Ausführungsform wie in den Figuren 10 und 11 gezeigt. Bei dieser Ausführungsform ist an dem gegenüber der Fig. 10 gegen die Stirnfläche 205 hin verlängerten Auslaßrohr 208 noch ein strichliniert gezeichnetes hohizylinderförmiges Rückhaltefilter 212 vorgesehen. Das Rückhaltefilter bildet eine im wesentlichen der Form des Rohrs entsprechende hohlzylinderförmige Fortsetzung des Auslaßrohrs 208. Der Rotor 222 ist bei dieser Anordnung derart in bezug auf das Rückhaltefilter 212 angeordnet, daß sich die Rotorblätter 222a in Längsrichtung des Rückhaltefilters und im Abstand hierzu erstrecken. Die Rotorblätter 222a haben im vorliegenden Falle einen bikonvexen Querschnitt, wie in Fig. 13 gezeigt. Aufgrund dieser besonderen Form wird bei einer Rotation der Rotorblätter 222a um die Längsachse des Filters zwischen Rotorblatt und Filter durch das zwischen diesen hindurchfließende Fluid ein Unterdruck erzeugt, der zur Ablösung von Filterrückständen auf der Oberfläche des Filters 212 führt. Gleichzeitig wird andererseits die Rotationsbewegung des Fluids im Zyklon verstärkt.

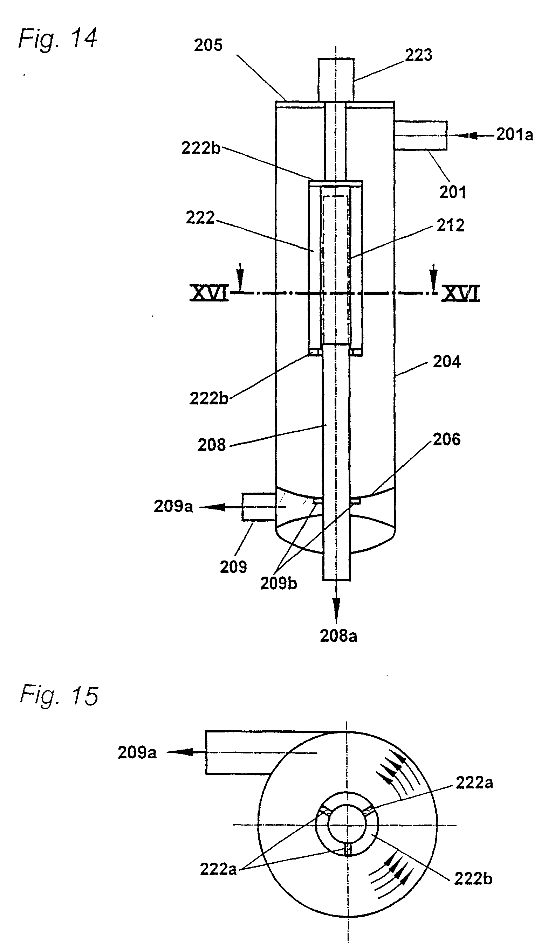

Das in den Figuren 14 und 15 dargestellte Ausführungsbeispiel unterscheidet sich von dem in den Figuren 12 und 13 dargestellten Ausführungsbeispielen lediglich dadurch, daß, wie aus Fig. 15 zu ersehen ist, die Rotorblätter ähnlich dem Ausführungsbeispiel in den Figuren 10 und 11 in Form von sich radial erstreckenden Platten ausgebildet sind. Bei diesem Ausführungsbeispiel sind die Abmessungen des Außendurchmessers des Rückhaltefilters 212 einerseits und des Durchmessers der Bahn, auf der sich die Innenkanten der Rotorblätter 212a bewegen können, derart gering gehalten, daß die Rotorblätter gleichzeitig als ein mechanischer Abstreifer der Oberfläche des Rückhaltefilters 212 dienen, während sie andererseits bei einer Drehung um die Achse des Zyklons gleichzeitig eine Erhöhung der Rotationsbewegung des Fluids in dem Zyklon bewirken.

Der erfindungsgemäße Zyklonabscheider kann z.B. auch als selbstreinigender Vorrats- und Lagerbehälter eingesetzt werden. Dabei strömt das zu reinigende Fluid 1a über den Einlaß 1 in das Gehäuse 4, wobei sich durch die oben beschriebene spezielle Fluidströmung innerhalb des Gehäuses bereits vorteilhaft eine Trennwirkung ergibt. Die Auslässe für das gereinigte Fluid 8a, für die dispergierten Stoffe 9a und gegebenenfalls für die Schwimmstoffe 11a können dabei z.B. über Ventile geschlossen sein, so daß nach dem Einlaß des dispergierte Stoffe enthaltenden Fluids und nach dessen Strömungsberuhigung im Gehäuse 4 zusätzlich eine gravitative Trennung (Absatztrennung) von Substanzen unterschiedlicher Dichte erfolgt Dabei setzen sich gegenüber dem Fluid spezifisch schwerere Substanzen an der Bodenwand 6 in der Nähe der Abflußöffnungen 9b ab, und können über diese z,B. nach einer bestimmten Zeit, während das Fluid vorzugsweise im Gehäuse 4 ruht, abgeleitet werden.

Durch den Auslaß 8 für das gereinigte Fluid 8a erhält man aufgrund der Zyklonwirkung beim Einlassen des Fluids 1a und aufgrund der gravitativen Trennung ein gereinigtes Fluid, das frei von dispergierten Stoffen ist. Wird durch den Auslaß 8 (für das gereinigte Fluid 8a) lediglich soviel Fluidmenge entnommen, daß z.B. im Falle einer Flüssigkeit der Flüssigkeitspegel deutlich über der Einlaßöffnung des Rohres 8 liegt, so ist die abgeleitete gereinigte Flüssigkeit 8a auch im wesentlichen frei von spezifisch leichteren Schwimmstoffen. Diese können z.B. vorteilhaft über das zweite Rohr 11 (siehe Fig. 6) abgeleitet werden. Dabei kann das zweite Rohr 11 zusätzlich als Überlauf dienen, wenn z.B. an diesem Rohr kein Ventil vorgesehen oder wenn das zum Rohr 11 gehörige Ventil geöffnet ist. Das Öffnen bzw. Schließen der Ventile der Auslässe 8 und/oder 11, 9 sowie des Einlasses 1 kann z.B. über entsprechende Flüssigkeitsstandmeßeinrichtungen erfolgen. Dadurch kann ein Überfüllen (ein zu hoher Flüssigkeitspegel im Gehäuse 4) des Zyklons bzw. ein zu weites Absinken des Flüssigkeitspegels im Gehäuse 4 vermieden werden, wodurch eine entsprechende Qualität der gereinigten Flüssigkeit, die durch den Auslaß 8 entnommen wird, sichergestellt ist.

Wie oben beschrieben, können auch mehrere konzentrisch ineinander angeordnete Rohre vorgesehen sein, durch die z.B. abhängig vom Flüssigkeitspegel im Gehäuse 4 die Schwimmstoffe entnommen werden können.

Der Zyklonabscheider kann alternativ auch so betrieben werden, daß das Gehäuse 4 durch den Einlaß 1 mit der zu reinigenden Flüssigkeit gefüllt wird, und daß dann durch die Auslässe kontinuierlich mit einem im Vergleich zum Einlaß wesentlich verringerten Fluß das gereinigte Fluid und/oder die Schwimmstoffe bzw. die dispergierten Stoffe entnommen werden. Ferner ist ein Betrieb auch derart möglich, daß an bestimmten Auslässen kontinuierlich entnommen wird, und daß andere Auslässe nur kurzzeitig nach vorgegebenen Zeiten oder abhängig von einer Füllstandsüberwachungseinrichtung aktiviert werden.

Das als Vorrats- oder Lagerbehälter verwendete Zyklon kann z.B. in Haushalten zum Reinigen von Brauchwasser (z.B. Bade- oder Duschwasser, Waschmaschinenwasser) eingesetzt werden. Das gereinigte-Wasser kann dann z.B. dort wiederverwendet werden, wo keine Trinkwasserqualität erforderlich ist, wie z.B. bei Toilettenspülanlagen.

## Patentansprüche

1. Zyklonabscheider mit einem im wesentlichen um eine Längsachse rotationssymmetrischen Gehäuse (4), einem in der Nähe einer Stirnfläche (5) des Gehäuses (4) angeordneten Einlaß (1) für eine im wesentlichen tangentiale Zuführung eines dispergierte Steoffe enthaltenden Fluids (1a) und wenigstens einem Auslaß (9) für die dispergierten Stoffe (9a) und wenigstens einem Auslaß (8) für das gereinigte Fluid (8a), **dadurch gekennzeichnet,**
**daß** der Einlaß (1) in einen das Gehäuse (4) in der Nähe seiner Stirnfläche (5) umgebenden Ringkanal (2) mündet,
**daß** wenigstens ein Teil der Gehäusewand in der Höhe des Ringkanals (2) in Form eines den Ringkanal (2) mit dem Inneren des Gehäuses (4) verbindenden Strömungsgleichrichters (3) ausgebildet ist,
**daß** die Innenseite des Gehäuses (4) an dem der einen Stirnseite (5) abgewandten anderen Stirnseitenende in Form einer wenigstens in einem an die Innenwand angrenzenden ersten Bereich gegen die Längsachse des Gehäuses (4) hin geneigten schalenförmigen Bodenwand (6, 6a) ausgebildet ist,
**daß** die Bodenwand (6, 6a) von einem konzentrisch zur Längsachse angeordneten Rohr (8) durchsetzt ist, das von der Bodenwand (6, 6a) über eine vorbestimmte Länge in Richtung der einen Stirnseite (5) hin vorsteht, und als Auslaß (8) für das gereinigte Fluid (8a) dient, und
**daß** in der Bodenwand (6, 6a) in der Nähe des Rohres (8) nahe der Rotationsachse des Fluids, wo sich spezifisch schwere Stoffe abscheiden, eine ringkanalförmige Abflußöffnung (9b) um das Rohr (8) vorgesehen ist, die als Auslaß für die dispergierten Stoffe (9a) dient.

2. Zyklonabscheider nach Anspruch 1, **dadurch gekennzeichnet,**
**daß** der Strömungsgleichrichter (3) sich in Höhe des Ringkanals (2) entlang des Umfangs der Gehäusewand erstreckt.

3. Zyklonabscheider nach einem der Ansprüche 1 bis 2, **dadurch gekennzeichnet,**
**daß** der Strömungsgleichrichter (3) durch ein Maschengitter (Sieb) gebildet wird.

4. Zyklonabscheider nach einem der Ansprüche 1 bis 2, **dadurch gekennzeichnet,**
**daß** der Strömungsgleichrichter (3) eine wabennetzförmige Struktur aufweist.

5. Zyklonabscheider nach einem der Ansprüche 1 bis 2, **dadurch gekennzeichnet,**
**daß** der Strömungsgleichrichter (3) parallel zur Längsachse angeordnete Stäbe zur Ausbildung einer Gitterstruktur umfaßt.

6. Zyklonabscheider nach einem der Ansprüche 1 bis 2, **dadurch gekennzeichnet,**
**daß** der Strömungsgleichrichter (3) parallel zur Längsachse verlaufende Spalte in der Gehäusewand umfaßt.

7. Zyklonabscheider nach einem der Ansprüche 1 bis 5, **dadurch gekennzeichnet,**
**daß** mehrere sich jeweils über einen Teil der Gehäusewand in Höhe des Ringkanals (2) erstreckende gleichartige Strömungsgleichrichter (3c) entlang des Umfangs der Gehäusewand (3b) angeordnet sind.

8. Zyklonabscheider nach einem der Ansprüche 1 bis 6,
**dadurch gekennzeichnet,**
**daß** mehrere sich jeweils über einen Teil der Gehäusewand in Höhe des Ringkanals (2) erstreckende verschiedenartige Strömungsgleichrichter (3c) entlang des Umfangs der Gehäusewand (3b) angebracht sind.

9. Zyklonabscheider mit einem im wesentlichen um eine Längsachse rotationssymmetrischen Gehäuse (204), einem in der Nähe einer Stirnfläche (205) des Gehäuses (204) angeordneten Einlaß (201) für eine im wesentlichen tangentiale Zuführung eines dispergierte Stoffe enthaltenden Fluids (201a) und wenigstens einen Auslaß (209) für die dispergierte Stoffe (209a) und wenigstens einen Auslaß (208) für das gereinigte Fluid (208a), **dadurch gekennzeichnet,**
**daß** im Inneren des Gehäuses (204) ein um die Achse des Gehäuses (204) drehbarer Rotor (222) angebracht ist,
**daß** die Innenseite des Gehäuses (204) an dem der einen Stirnseite (205) abgewandten anderen Stirnseitenende in Form einer wenigstens in einem an die Innenwand angrenzenden ersten Bereich gegen die Längsachse des Gehäuses (204) hin geneigten schalenförmigen Bodenwand (206) ausgebildet ist,
**daß** die Bodenwand (206) von einem konzentrisch zur Längsachse angeordneten Rohr (208) durchsetzt ist, das von der Bodenwand (206) über eine vorbestimmte Länge in Richtung der einen Stirnseite (205) hin vorsteht, und als Auslaß (208) für das gereinigte Fluid (208a) dient, und
**daß** in der Bodenwand (206) in der Nähe des Rohres (208) nahe der Rotationsachse des Fluids, wo sich spezifisch schwere Stoffe abscheiden, eine ringkanalförmige Abflußöffnung (209b) um das Rohr (208) vorgesehen ist, die als Auslaß für die dispergierten Stoffe (209a) dient.

10. Zyklonabscheider nach einem der Ansprüche 1 bis 9, **dadurch gekennzeichnet,**
**daß** die Innenseite des Gehäuses (4, 204) an dem der einen Stirnseite (5, 205) abgewandten anderen Stirnseitenende in Form einer durchgehend gegen die Längsachse des Gehäuses (4, 204) hin geneigten schalenförmigen Bodenwand (6, 206) ausgebildet ist.

11. Zyklonabscheider nach einem der Ansprüche 1 bis 10, **dadurch gekennzeichnet,**
**daß** die Innenseite des Gehäuses (4, 204) auf der Höhe des Einlasses (1, 201) zylinderförmig ausgebildet ist.

12. Zyklonabscheider nach einem der Ansprüche 1 bis 11, **dadurch gekennzeichnet,**
**daß** die Innenseite des Gehäuses (4, 204) entlang der Längsachse zwischen dem Einlaßbereich (1, 201) und der schalenförmigen Bodenwand (6, 6a, 206) zylinderförmig ausgebildet ist.

13. Zyklonabscheider nach einem der Ansprüche 1 bis 12, **dadurch gekennzeichnet,**
**daß** die Innenseite des Gehäuses (4, 4a, 204) entlang der Längsachse in der Nähe der schalenförmigen Bodenfläche kegelförmig ausgebildet ist.

14. Zyklonabscheider nach einem der Ansprüche 1 bis 11, **dadurch gekennzeichnet,**
**daß** die schalenförmige Bodenwand (6, 206) sich bis zur Höhe des Einlaßbereichs (1, 201) fortsetzt.

15. Zyklonabscheider nach einem der Ansprüche 1 bis 14, **dadurch gekennzeichnet,**
**daß** die Bodenwand (6, 6a, 206) konkav mit dem Auslaß (8, 208) für das gereinigte Fluid (8a, 208a) verbunden ist.

16. Zyklonabscheider nach einem der Ansprüche 1 bis 15, **dadurch gekennzeichnet,**
**daß** am Gehäuse (4, 204) in der Nähe des Einlasses (1, 201) ein Be- und Entlüftungsventil (10) vorgesehen ist.

17. Zyklonabscheider nach einem der Ansprüche 1 bis 16, **dadurch gekennzeichnet,**
**daß** ein konzentrisch zur Längsachse und abschnittsweise innerhalb des Rohres (8) für den Auslaß des gereinigten Fluids (8a) verlaufendes zweites Rohr (11) so angebracht ist, daß zwischen beiden Rohren (8, 11) ein Ringraum (8b) für den Auslaß des gereinigten Fluids (8a) ausgebildet ist, und daß das zweite Rohr (11) in Richtung des Einlasses (1) über das als Auslaß für das gereinigte Fluid (8a) dienende Rohr (8) vorsteht und einen zusätzlichen Auslaß bildet.

18. Zyklonabscheider nach einem der Ansprüche 1 bis 17, **dadurch gekennzeichnet,**
**daß** vor dem Auslaß (8, 108, 208) für das gereinigte Fluid (8a, 108a, 208a) eine nach dem Rückhalteprinzip arbeitende Filtervorrichtung (12, 112, 212) angebracht ist.

19. Zyklonabscheider nach Anspruch 18, **dadurch gekennzeichnet,**
**daß** in dem strömenden Fluid (201a) in einem geringen Abstand zu einem Oberflächenbereich des Filters (212) wenigstens ein Rotorblatt (222a) derart angeordnet ist, daß es bei einer Drehung relativ zum Filter (212) Filterrückstand von der Oberfläche des Filters (212) mechanisch abstreift.

20. Zyklonabscheider nach Anspruch 18, **dadurch gekennzeichnet,**
**daß** in dem strömenden Fluid (101a) im Abstand zu einem Oberflächenbereich des Filters (112) wenigstens eine Strömungsleitfläche (113) derart angeordnet ist, daß auf den zwischen Strömungsleitfläche (113) und dem Oberflächenbereich des Filters (112) durchströmenden Teil des Fluids eine die Strömungsgeschwindigkeit erhöhende Düsenwirkung ausgeübt wird.

21. Zyklonabscheider nach Anspruch 20, **dadurch gekennzeichnet,**
**daß** die Strömungsleitfläche (113) und das Filter (112) relativ zueinander und zur Strömungsrichtung des zu filtrierenden Fluids bewegbar sind.

22. Zyklonabscheider nach Anspruch 21, **dadurch gekennzeichnet,**
**daß** durch die Relativbewegung von Strömungsleitfläche (113) und Filter (112) die dem zu filtrierenden Fluid (101a) zugekehrte Oberfläche des Filters (112) im wesentlichen vollständig mit der erhöhten Strömungsgeschwindigkeit in Kontakt bringbar ist.

23. Zyklonabscheider nach einem der Ansprüche 20 bis 22, **dadurch gekennzeichnet,**
**daß** die Strömungsleitfläche (113) zusammen mit der Oberfläche des Filters (112) einen Venturi-düsenartigen Strömungskanal bilden, wobei der Querschnitt des Kanals senkrecht zur Strömungsrichtung von einem Mittenbereich der Strömungsleitfläche sowohl in Strömungsrichtung als auch entgegen der Strömungsrichtung des zu filternden Fluids (101a) kontinuierlich zunimmt.

24. Zyklonabscheider nach einem der Ansprüche 20 bis 23, **dadurch gekennzeichnet,**
**daß** die Strömungsleitflächen die Rotorblätter (222a) eines Rotors (222) darstellen, der derart ausgebildet ist, daß durch seine Rotation die Strömungsgeschwindigkeiten sowohl in einem radial inneren Bereich als auch in einem radial äußeren Bereich erhöht werden.

## Claims

1. Cyclone separator with a housing (4) essentially rotation-symmetrical about a longitudinal axis, an inlet (1) located in the vicinity of a front surface (5) of the housing (4) for an essentially tangential inlet of a fluid (1a) containing disperse substances and at least one outlet (9) for the dispersed substances (9a) and at least one outlet (8) for the cleaned fluid (8a), **characterized in**
**that** the inlet (1) opens into a ring channel (2) surrounding the housing (4) in the vicinity of its front surface (5),
**that** at least a portion of the housing wall is designed at the level of the ring channel (2) in the shape of a flow rectifier (3) connecting the ring channel (2) to the interior of the housing (4),
**that** the inside of the housing (4), at the other front side end turned away from the one front side (5), is designed as a dish-like bottom wall (6, 6a) inclined toward the longitudinal axis of the housing (4), at least in one first region adjoining the inner wall, that the bottom wall (6, 6a) is permeated by a tube (8) located concentric to the longitudinal axis, said tube protrudes from the bottom wall (6, 6a) by a defined length in the direction of the one front side (5) and serves as outlet (8) for the cleaned fluid (8a), and
**that** in the bottom wall (6, 6a), in the vicinity of the tube (8) near by the rotational axis of the fluid, where specifically heavy particals are separated, an outlet opening (9b) in the form of a ring channel around the tube (8) is provided which serve as outlet for the dispersed substances (9a).

2. Cyclone separator according to Claim 1, **characterized in**
**that** the flow rectifier (3) extends along the perimeter of the housing wall at the level of the ring channel (2).

3. Cyclone separator according to one of Claims 1 to 2, **characterized in**
**that** the flow rectifier (3) is formed by a mesh lattice (screen).

4. Cyclone separator according to one of Claims 1 to 2, **characterized in**
**that** the flow rectifier (3) has a honeycomb-like structure.

5. Cyclone separator according to one of Claims 1 to 2, **characterized in**
**that** the flow rectifier (3) is composed of rods arranged parallel to the longitudinal axis to form a lattice structure.

6. Cyclone separator according to one of Claims 1 to 2, **characterized in**
**that** the flow rectifier (3) is composed of gaps in the housing wall running parallel to the longitudinal axis.

7. Cyclone separator according to one of Claims 1 to 5, **characterized in**
**that** several similar flow rectifiers (3c) each extending over a part of the housing wall at the level of the ring channel (2) are arranged along the perimeter of the housing wall (3b).

8. Cyclone separator according to one of Claims 1 to 6, **characterized in**
**that** several different-type flow rectifiers (3c) each extending over a part of the housing wall at the level of the ring channel (2) are arranged along the perimeter of the housing wall (3b).

9. Cyclone separator with a housing (204) essentially rotation-symmetrical about a longitudinal axis, an inlet (201) located in the vicinity of a front surface (205) of the housing (204) for an essentially tangential inlet of a fluid (201a) containing dispersed substances, and at least one outlet (209) for the dispersed substances (209a) and at least one outlet (208) for the cleaned fluid (208a), **characterized in**
**that** in the interior of the housing (204) there is a rotor (222) that can rotate about the axis of the housing (204),
**that** the inside of the housing (204), at the other front side end turned away from the one front side (205), is designed as a dish-like bottom wall (206) inclined toward the longitudinal axis of the housing (204), at least in one first region adjoining the inner wall,
**that** the bottom wall (206) is permeated by a tube (208) located concentric to the longitudinal axis, said tube protrudes from the bottom wall (206) by a defined length in the direction of the one front side (205) and serves as outlet (208) for the cleaned fluid (208a), and
**that** in the bottom wall (206), in the vicinity of the tube (208) near by the rotational axis of the fluid, where specifically heavy particals are separated, an outlet opening (209b) in the form of a ring channel around the tube (208) is provided which serve as outlet for the dispersed substances (209a).

10. Cyclone separator according to one of Claims 1 to 9, **characterized in**
**that** the inside of the housing (4, 204) at the other front side end turned away from the one front side (5, 205) is designed as a dish-like bottom wall (6, 206) entirely inclined toward the longitudinal axis of the housing (4, 204).

11. Cyclone separator according to one of Claims 1 to 10, **characterized in**
**that** the inside of the housing (4, 204) is of cylindrical-like design at the level of the inlet (1, 201).

12. Cyclone separator according to one of Claims 1 to 11, **characterized in**
**that** the inside of the housing (4, 204) is of cylindrical-like design along the longitudinal axis between the inlet region (1, 201) and the dish-like bottom wall (6, 6a, 206).

13. Cyclone separator according to one of Claims 1 to 12, **characterized in**
**that** the inside of the housing (4, 4a, 204) is of conical-like design along the longitudinal axis in the vicinity of the dish-like bottom surface.

14. Cyclone separator according to one of Claims 1 to 11, **characterized in**
**that** the dish-like bottom wall (6, 206) continues up to the level of the inlet region (1, 201).

15. Cyclone separator according to one of Claims 1 to 14, **characterized in**
**that** the bottom wall (6, 6a, 206) is connected concave to the outlet (8, 208) for the cleaned fluid (8a, 208a).

16. Cyclone separator according to one of Claims 1 to 15, **characterized in**
**that** a ventilation valve (10) is provided on the housing (4, 204) in the vicinity of the inlet (1, 201).

17. Cyclone separator according to one of Claims 1 to 16, **characterized in**
**that** a second tube (11) is provided which runs concentric to the longitudinal axis and in sections within the tube (8) for the outlet of the cleaned fluid (8a), such that an annulus (8b) for the outlet of the cleaned fluid (8a) is formed between the two tubes (8, 11), and that the second tube (11) protrudes in the direction of the inlet (1) past the tube (8) serving as outlet for the cleaned fluid (8a) and forms an additional outlet.

18. Cyclone separator according to one of Claims 1 to 17, **characterized in**
**that** a filter device (12, 112, 212) operating according to the retention principle is located in front of the outlet (8, 108, 208) for the cleaned fluid (8a, 108a, 208a).

19. Cyclone separator according to Claim 18, **characterized in**
**that** in the flowing fluid (201a), at a short distance from one surface region of the filter (212), at least one rotor blade (222a) is provided such that during a rotation relative to the filter (212), filter residue is mechanically stripped off from the surface of the filter (212).

20. Cyclone separator according to Claim 18, **characterized in**
**that** in the flowing fluid (101a), at a distance from one surface region of the filter (112), at least one flow control surface (113) is provided, such that a nozzle effect increasing the rate of flow is exerted onto the portion of the fluid passing through between flow control surface (113) and the surface region of the filter (112).

21. Cyclone separator according to Claim 20, **characterized in**
**that** the flow control surface (113) and the filter (112) can move relative to each other and relative to the direction of flow of the fluid to be filtered.

22. Cyclone separator according to Claim 21, **characterized in**
**that** due to the relative movement of flow control surface (113) and filter (112), the surface of the filter (112) facing the fluid (101a) to be filtered can be brought essentially completely in contact with the increased speed of flow.

23. Cyclone separator according to one of Claims 20 to 22, **characterized in**
**that** the flow control surface (113), together with the surface of the filter (112), forms a venturi-nozzle-like flow channel, where the cross section of the channel increases steadily perpendicular to the direction of flow from a middle region of the flow control surface, both in the direction of flow and also opposite the direction of flow of the fluid (101a) to be filtered.

24. Cyclone separator according to one of Claims 20 to 23, **characterized in**
**that** the flow control surfaces represent the rotor blades (222a) of a rotor (222), which is designed in such a manner that due to its rotation, the flow velocities are increased both in a radial inner region, and also in a radial outer region.

## Revendications

1. Séparateur cyclone avec un corps (4) essentiellement à symétrie de révolution autour d'un axe longitudinal, avec une admission (1) placée à proximité d'une face terminale (5) du corps (4) pour une amenée essentiellement tangentielle d'un fluide (1a) contenant des matières dispersées, et avec au moins une sortie (9) pour les matières dispersées (9a) et au moins une sortie (8) pour le fluide purifié (8a), **caractérisé en ce que**
l'admission (1) débouche dans un canal annulaire (2) qui entoure le corps (4) à proximité de sa face terminale (5), au moins une partie de la paroi du corps au niveau du canal annulaire (2) est conçue sous forme d'un redresseur d'écoulement (3) reliant le canal annulaire (2) et l'intérieur du corps (4),
la face interne du corps (4) à l'autre face terminale d'extrémité opposée à la face terminale (5) est conçue sous forme d'une paroi de fond (6, 6a) en forme de cuvette inclinée vers l'axe longitudinal du corps (4) au moins dans une première zone contiguë à la paroi intérieure,
la paroi de fond (6, 6a) est traversée par un tube (8) concentrique par rapport à l'axe longitudinal, qui dépasse de la paroi de fond (6, 6a) sur une longueur prédéfinie en direction de la face terminale (5) et qui sert de sortie (8) pour le fluide purifié (8a) et
dans la paroi de fond (6, 6a), à proximité du tube (8) près de l'axe de rotation du fluide où des matières spécifiquement lourdes se séparent, est prévue autour du tube (8) une bonde (9b) en forme de canal annulaire, qui sert de sortie pour les matières dispersées (9a).

2. Séparateur cyclone selon la revendication 1, **caractérisé en ce que**
le redresseur d'écoulement (3) s'étend au niveau du canal annulaire (2) le long de la circonférence de la paroi du corps.

3. Séparateur cyclone selon l'une des revendications 1 ou 2, **caractérisé en ce que**
le redresseur d'écoulement (3) est formé par une grille maillée (tamis).

4. Séparateur cyclone selon l'une des revendications 1 ou 2, **caractérisé en ce que**
le redresseur d'écoulement (3) présente une structure en nid d'abeilles.

5. Séparateur cyclone selon l'une des revendications 1 ou 2, **caractérisé en ce que**
le redresseur d'écoulement (3) comprend des barres disposées parallèlement à l'axe longitudinal pour former une structure en grille.

6. Séparateur cyclone selon l'une des revendications 1 ou 2, **caractérisé en ce que**
le redresseur d'écoulement (3) comprend des fentes aménagées dans la paroi du corps et parallèles à l'axe longitudinal.

7. Séparateur cyclone selon l'une des revendications 1 à 5, **caractérisé en ce que**
plusieurs redresseurs d'écoulement (3c) similaires qui s'étendent respectivement sur une partie de la paroi du corps au niveau du canal annulaire (2) sont disposés le long de la circonférence de la paroi du corps (3b).

8. Séparateur cyclone selon l'une des revendications 1 à 6, **caractérisé en ce que**
plusieurs redresseurs d'écoulement (3c) différents qui s'étendent respectivement sur une partie de la paroi du corps au niveau du canal annulaire (2) sont disposés le long de la circonférence de la paroi du corps (3b).

9. Séparateur cyclone avec un corps (204) essentiellement à symétrie de révolution autour d'un axe longitudinal, avec une admission (201) placée à proximité d'une face terminale (205) du corps (204) pour une amenée essentiellement tangentielle d'un fluide (201a) contenant des matières dispersées, et avec au moins une sortie (209) pour les matières dispersées (209a) et au moins une sortie (208) pour le fluide purifié (208a), **caractérisé en ce que**
à l'intérieur du corps (204) est disposé un rotor (222) tournant autour de l'axe du corps (204),
la face interne du corps (204) sur l'autre face terminale d'extrémité opposée à la face terminale (205) est conçue sous forme d'une paroi de fond (206) en forme de cuvette inclinée vers l'axe longitudinal du corps (204) au moins dans une première zone contiguë à la paroi intérieure,
la paroi de fond (206) est traversée par un tube (208) concentrique par rapport à l'axe longitudinal, qui dépasse de la paroi de fond (206) sur une longueur prédéfinie en direction de la face terminale (205) et: qui sert de sortie (208) pour le fluide purifié (208a), et
dans la paroi de fond (206), à proximité du tube (208) près de l'axe de rotation du fluide où des matières spécifiquement lourdes se séparent, est prévue autour du tube (208) une bonde (209b) en forme de canal annulaire, qui sert de sortie pour les matières dispersées (209a).

10. Séparateur cyclone selon l'une des revendications 1 à 9, **caractérisé en ce que**
la face interne du corps (4, 204) sur l'autre face terminale d'extrémité opposée à la face terminale (5, 205) est conçue sous forme d'une paroi de fond (6, 206) en forme de cuvette inclinée de bout en bout vers l'axe longitudinal du corps (4, 204).

11. Séparateur cyclone selon l'une des revendications 1 à 10, **caractérisé en ce que**
la face interne du corps (4, 204) est conçue avec une forme cylindrique au niveau de l'admission (1, 201).

12. Séparateur cyclone selon l'une des revendications 1 à 11, **caractérisé en ce que**
la face interne du corps (4, 204) est conçue avec une forme cylindrique le long de l'axe longitudinal entre la zone d'admission (1, 201) et la paroi de fond (6, 6a, 206) en forme de cuvette.

13. Séparateur cyclone selon l'une des revendications 1 à 12, **caractérisé en ce que**
la face interne du corps (4, 4a, 204) est conçue avec une forme conique le long de l'axe longitudinal à proximité de la surface de fond en forme de cuvette.

14. Séparateur cyclone selon l'une des revendications 1 à 11, **caractérisé en ce que**
la paroi de fond (6, 206) en forme de cuvette se poursuit jusqu'au niveau de la zone d'admission (1, 201).

15. Séparateur cyclone selon l'une des revendications 1 à 14, **caractérisé en ce que**
la paroi de fond (6, 6a, 206) est reliée de façon concave à la sortie (8, 208) pour le fluide purifié (8a, 208a).

16. Séparateur cyclone selon l'une des revendications 1 à 15, **caractérisé en ce que**
sur le corps (4, 204) on prévoit une soupape de ventilation et de purge d'air (10) à proximité de l'admission (1, 201).

17. Séparateur cyclone selon l'une des revendications 1 à 16, **caractérisé en ce que**
un deuxième tube (11) concentrique par rapport à l'axe longitudinal et situé en partie à l'intérieur du tube (8) pour la sortie du fluide purifié (8a) est disposé de telle sorte qu'entre les deux tubes (8, 11) est formé un espace annulaire (8b) pour la sortie du fluide purifié (8a) et que le deuxième tube (11) dépasse, en direction de l'admission (1), du tube (8) servant de sortie pour le fluide purifié (8a) et forme une sortie supplémentaire.

18. Séparateur cyclone selon l'une des revendications 1 à 17, **caractérisé en ce que**
en amont de la sortie (8, 108, 208) pour le fluide purifié (8a, 108a, 208a) est placé un dispositif de filtration (12, 112, 212) fonctionnant selon le principe de rétention.

19. Séparateur cyclone selon la revendication 18, **caractérisé en ce que**
dans le fluide qui s'écoule (201a) est disposée à une faible distance par rapport à une zone de surface du filtre (212) au moins une pale de rotor (222a) de telle manière que lors d'une rotation par rapport au filtre (212) le résidu de filtration se décolle mécaniquement de la surface du filtre (212).

20. Séparateur cyclone selon la revendication 18, **caractérisé en ce que**
dans le fluide qui s'écoule (101a) est disposée à distance d'une zone de surface du filtre (112) au moins une surface de guidage du flux (113) de telle manière que sur la partie du fluide qui passe entre la surface de guidage du flux (113) et la zone de surface du filtre (112) est exercé un effet de buse qui augmente la vitesse d'écoulement.

21. Séparateur cyclone selon la revendication 20, **caractérisé en ce que**
la surface de guidage du flux (113) et le filtre (112) sont mobiles l'un par rapport à l'autre et par rapport au sens d'écoulement du fluide à filtrer.

22. Séparateur cyclone selon la revendication 21, **caractérisé en ce que**
du fait du mouvement relatif de la surface de guidage du flux (113) et du filtre (112), la surface du filtre (112) adjacente au fluide à filtrer (101a) est mise en contact essentiellement intégralement avec l'écoulement à vitesse accrue.

23. Séparateur cyclone selon l'une des revendications 20 à 22, **caractérisé en ce que**
la surface de guidage du flux (113) et la surface du filtre (112) forment ensemble un canal d'écoulement de type tube de Venturi, la section transversale du canal augmentant en continu perpendiculairement au sens d'écoulement depuis une zone centrale de la surface de guidage du flux aussi bien dans le sens d'écoulement que contre le sens d'écoulement du fluide à filtrer (101a).

24. Séparateur cyclone selon l'une des revendications 20 à 23, **caractérisé en ce que**
les surfaces de guidage du flux représentent les pales de rotor (222a) d'un rotor (222) qui est conçu de telle manière que du fait de sa rotation les vitesses d'écoulement sont augmentées aussi bien dans une zone radiale intérieure que dans une zone radiale extérieure.
